# EUROPÄISCHE PATENTSCHRIFT

(11) **EP 0 979 709 B1**
(45) Veröffentlichungstag und Bekanntmachung des Hinweises auf die Patenterteilung: **22.09.2004**
(21) Anmeldenummer: 99114756.2
(22) Anmeldetag: 28.07.1999
(51) Int. Cl.: B25J 19/00

(54) **Verschleissring für einen Kabelführungsschlauch eines Roboters**
Mounting ring for the cable guiding tube in a robot
Anneau de connection pour le conduit de câbles sur un robot

(30) Priorität: 11.08.1998 DE 29814418 U
(43) Veröffentlichungstag der Anmeldung: 16.02.2000
(73) Patentinhaber: KUKA Roboter GmbH, 86165 Augsburg (DE)
(72) Erfinder: Berninger, Alwin, 86159 Augsburg (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 233 417
- FR-A- 2 599 568
- US-A- 4 178 949
- US-A- 4 986 575

## Beschreibung

Die Erfindung betrifft einen Verschleißring, insbesondere zum Schutz eines Kabelführungsschlauches an einem Roboter.

Derartige Verschleißringe sind an kritischen Stellen eines Schutzschlauches für Kabel an Maschinen, insbesondere einem Roboter, angeordnet, um eine Beschädigung des Schutzschlauches selbst durch Scheuern an solchen kritischen Stellen, wie beispielsweise dort, wo er bewegte Roboterteile, wie eine Schwinge, einen Arm oder eine Hand berühren kann, zu verhindern. Da die Verschleißringe an kritischen Stellen angeordnet sind, können sie selbst abgescheuert werden. Dies wird oft nicht hinreichend genau beobachtet, so daß die Gefahr besteht, daß nach Durchscheuern des Verschleißringes auch der Schutzschlauch beschädigt wird, insbesondere wenn Verschleißring und Schlauch unauffällige Farben, insbesondere die gleiche Farbgebung, aufweisen.

Die Verschleißringe bestehen in der Regel aus zwei Halbschalen, die mittels Metallschrauben miteinander verbunden sind. Wenn der Verschleißring im Bereich der Schraubenbefestigung sich abscheuert, so treten die versenkten Köpfe der Schraube hervor und können dann Roboterteile, an denen die Verschleißringe und damit die hervortretenden Schraubköpfe entlangscheuern, beschädigen. Schließlich wird oftmals nicht ein einstückiger Schlauch gewünscht und eingesetzt, sondern ein aus mindestens zwei Teilen bestehender Schutzschlauch, beispielsweise Schutzschlauchteilen mit unterschiedlicher Elastizität. Diese müssen durch zusätzliche, und damit kostenverursachende Kupplungsmuffen miteinander verbunden werden.

Die US 4, 178, 949 zeigt drehbare Verschleißringe an einem Peitschenschlauch zur Schwimmbeckenreinigung.

Die US 4, 986, 575 zeigt Kunststoffschutzrohre für Kabelbäume in Motorfahrzeugen, wobei die Schutzröhren aus zwei relativ zueinander verdrehbaren Teilen bestehen, um so eine verschließbare seitliche Öffnung zum seitlichen Einlegen der Kabel zu schaffen.

Die EP 0 233 417 zeigt eine Hülse zum Schutz einer Verschleißung von Drähten eines Kabels.

Der Erfindung liegt die Aufgabe zugrunde, unter Vermeidung der eingangs genannten Nachteile einen Verschleißring zu schaffen, mit dem insbesondere die Gefahr von Beschädigungen des Schutzschlauches weiter reduziert werden kann.

Erfindungsgemäß wird die genannte Aufgabe mit einem Verschleißring gemäß den Merkmalen des Anspruchs 1 gelöst.

Durch die mit unterschiedlicher Lichtabsorbtion und damit -reflektion, also unterschiedlicher Farbe versehenen, im wesentlichen koaxialen Schichten des Verschleißrings kann nach Abnutzung der äußeren Schicht, wenn dann die untere Schicht anderer Farbe sichtbar wird, leicht festgestellt werden, daß der Verschleißring soweit verschlissen ist, daß er auszutauschen ist. Die untere Schicht wird dabei vorzugsweise mit einem Reflektions-Vermögen versehen, das ins Auge fällt, insbesondere also beispielsweise einem Signalrot.

Wenn in bevorzugter weiterer Ausgestaltung vorgesehen ist, daß die Schichten mittels Rippen und Nuten ineinandergreifen, kann darüber hinaus leicht das Fortschreiten des Verschleißes des Verschleißrings überwacht werden; sobald keine Farbe der äußeren Schicht im Rippenbereich derselben mehr sichtbar ist, so ist die Maximalgrenze der Nutzung des Verschleißringes erreicht. In weiterer bevorzugter Ausgestaltung ist dabei vorgesehen, daß die äußere Schicht, bis gegebenenfalls auf ihre Rippen, konstante radiale Stärke aufweist. In äußerster bevorzugter Ausgestaltung ist weiterhin vorgesehen, daß die Schichten fest miteinander verbunden sind, wobei entweder die Schichten durch einen zweistufigen Schichtspritzvorgang miteinander fest verbunden, die Schichten miteinander verschweißt, oder aber die Schichten miteinander verklebt sind.

Alternativ kann auch vorgesehen sein, daß die Schichten lediglich reibschlüssig miteinander verbunden sind, wobei insbesondere die Schichten über ihre Rippen und Nuten reibschlüssig miteinander verbunden sind.

Bevorzugterweise kann bei einem Verschleißring weiterhin vorgesehen sein, daß er an seiner Innenseite mindestens vier Umfangsrippen aufweist. Indem mindestens vier Rippen am Innenumfang des Verschleißrings, insbesondere an dessen innerer Schicht vorgesehen sind, kann dieser zur Verbindung zweier Schlauchstücke verwendet werden, die jeweils mittels zwei Innen-Umfangsrippen des Verschleißrings gehalten werden. Der Verschleißring kann daher in vorteilhafter Weise als Kupplungsmuffe für zwei Schlauchstücke eingesetzt werden, beispielsweise beim Einsatz von Schlauchstücken unterschiedlicher Elastizität.

In bevorzugter Ausgestaltung sieht die Erfindung darüber hinaus vor, daß zwei den Verschleißring bildende Halbschalen gespritzte Innengewinde und in diese eingreifende Kunststoffschrauben aufweisen, wobei insbesondere die Schrauben aus Polyamid bestehen. Hierdurch wird die Verwendung von Metallteilen zur Verbindung der beiden Halbschalen des Verschleißrings vermieden, so daß eine Beschädigung am Verschleißring entlangschleifender Teile des Roboters selbst auch bei fortgeschrittener Abtragung des Kunststoffmaterials verhindert wird, wie dies bei den Metallschrauben aufweisenden bekannten Verschleißteilen in nachteiliger Weise der Fall ist.

Weitere Vorteile der Erfindung ergeben sich aus den Ansprüchen, aus der nachfolgenden Beschreibung, in der ein Ausführungsbeispiel der Erfindung unter Bezugnahme auf die Zeichnungen im einzelnen erläutert ist. Dabei zeigt:
- Fig. 1: einen Roboter in Seitenansicht;

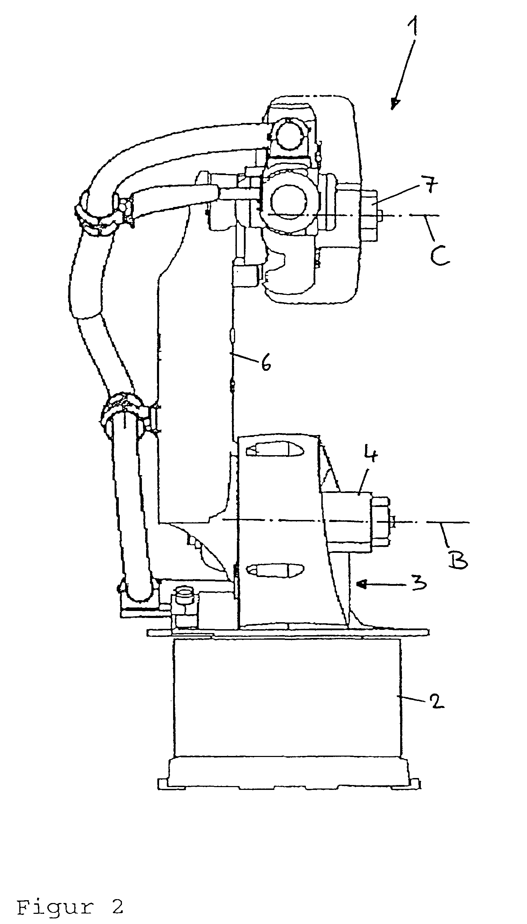

- Fig. 2: den Roboter in Stirnansicht entsprechend dem Pfeil II der Fig. 1;
- Fig. 3: einen Schutzschlauch für Kabel mit seinen wesentlichen Komponenten;
- Fig. 4: eine vergrößerte Darstellung eines Ausschnitts des Schutzschlauches der Fig. 3;
- Fig. 5: einen achsparallelen Querschnitt durch einen erfindungsgemäßen Verschleißring;
- Fig. 6: eine vergrößerte Teildarstellung des Gegenstands der Fig. 5; und
- Fig. 7: einen achssenkrechten Querschnitt entsprechen A-A durch einen Verschleißring der Fig. 5.

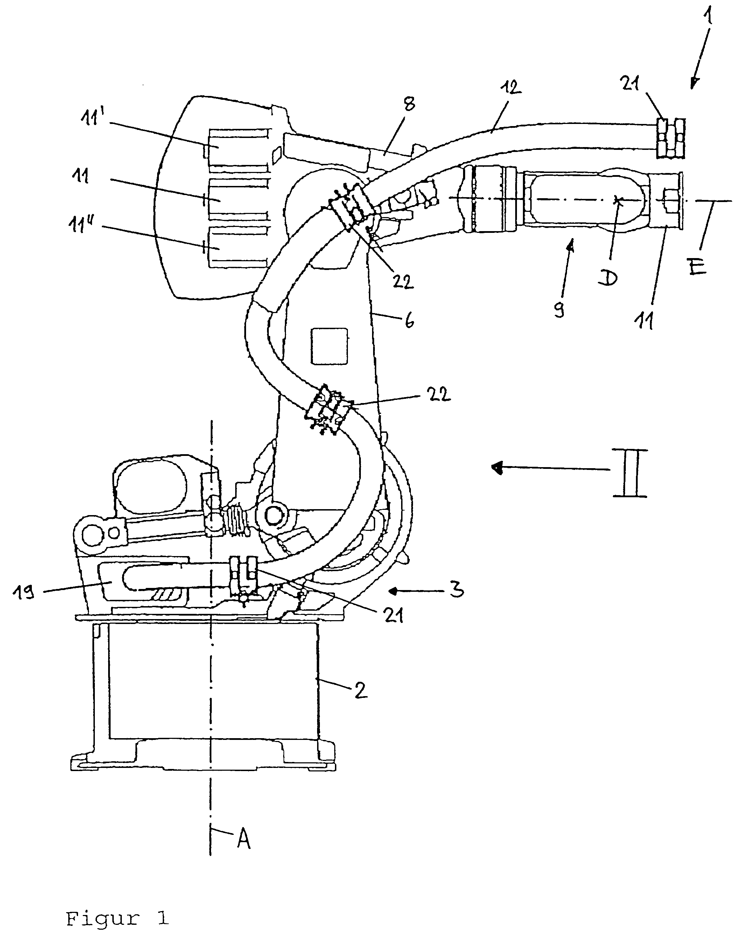

Der Roboter 1 der Fig. 1 weist einen fest mit dem Erdboden verbundenen Sockel 2 auf, auf dem sich die um die vertikale A-Achse drehbare Roboterbasis 3, das "Karussell", befindet. Mit dieser ist um die vertikale B-Achse mittels eines Motors 4 schwenkbar eine Schwinge 6 angeordnet. An deren der Basis 3 abgewandten freien Ende ist mit ihr und um die ebenfalls horizontale C-Achse mittels des Motors 7 verschwenkbar ein Roboterarm 8 angeordnet. Dieser trägt an seinem vorderen freien Ende 9 eine Roboterhand 11, die wiederum zumindest über eine weitere horizontale D-Achse und eine hierzu senkrecht gerichtete E-Achse verschwenkbar ist. Die Verschwenkung um letzere E-Achse kann von einem am rückwärtigen Ende des Armes 8 angeordneten Antriebselemente erfolgen. Weitere Bewegungen einer kompliziert ausgebildeten Roboterhand, wie einer Doppelwinkelhand oder eines Werkzeugs können durch weitere, am rückwärtigen Ende des Arms 8 angeordnete Motoren 11, 11' ebenfalls über durch den Arm 8 sich erstreckende Antriebselemente bewirkt werden.

Sowohl die Motoren als auch Werkzeuge, wie beispielsweise ein Schweißwerkzeug, müssen vom Robotersockel 2 her mit Energie versorgt werden. Dies kann durch die Roboterelemente (Schwinge, Arm) oder aber an der Außenseite des Roboters erfolgen, was in vielen Fällen vorteilhafter ist. Damit die Kabel zu einer Energieversorgung von Motoren und Werkzeugen geschützt sind, sind sie von einem Schutzschlauch 12 umgeben, der entlang der Außenseite des Roboters geführt und punktuell an diesem festgelegt ist.

Bei dem Schutzschlauch 12 handelt es sich um einen mit Rippen 13 versehenen Schlauch. Der Schlauch ist an seinen Enden mit Endstücken 14 versehen. Er kann Verschleißringe 16, sowie eine Druckfeder 17 aufweisen, die ihn bei Entlastung im Hinblick auf die Roboterbewegung in eine Ausgangslage bringt. Als Widerlager für die Druckfeder ist ein Federendhalter 18 vorgesehen.

Die Festlegung des Schlauches an der Basis 3 erfolgt bei dem dargestellten Ausführungsbeispiel durch ein Schottblech 19, sowie über die Länge des Schlauches hin durch Klemmschellen 21 und über Schlauchhalter 22.

Die Verschleißringe 16 verhindern ein direktes Scheuern und damit eine Beschädigung des Schlauches an bewegten Roboterteilen, wie an Schwinge 6, Arm 8 und Hand 11. Der Schlauchhalter 22 dient zur Abstützung und Führung des Schlauches 12 an einer oder mehreren Stellen an Schwinge 6 und Arm 8 des Roboters 1.

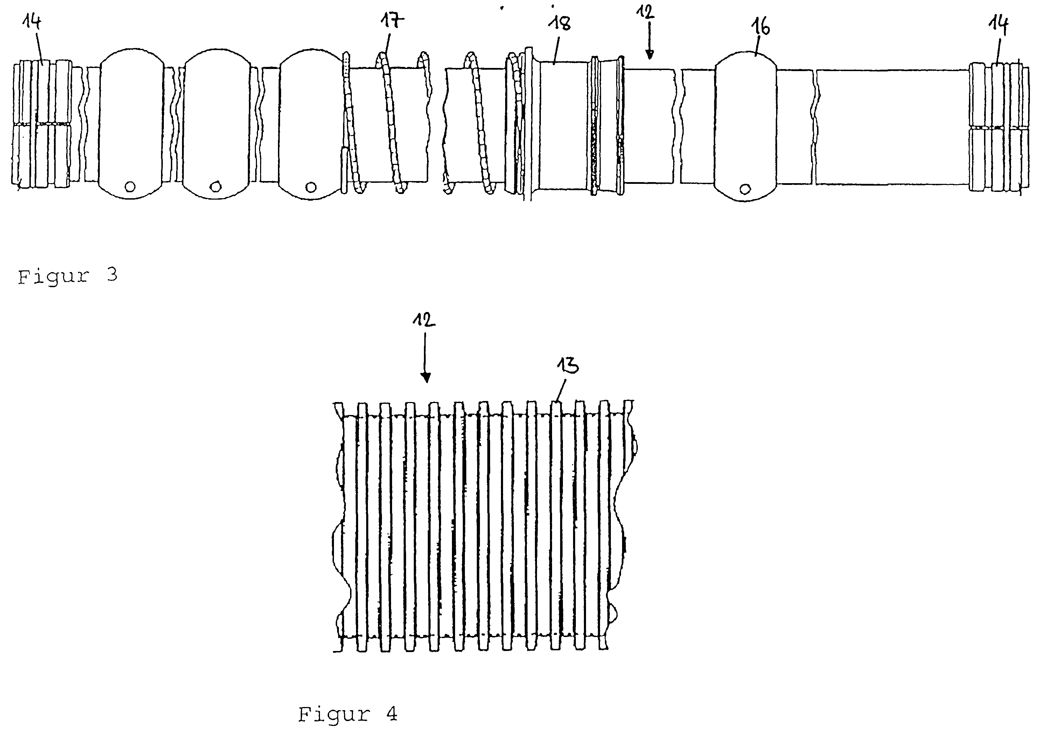

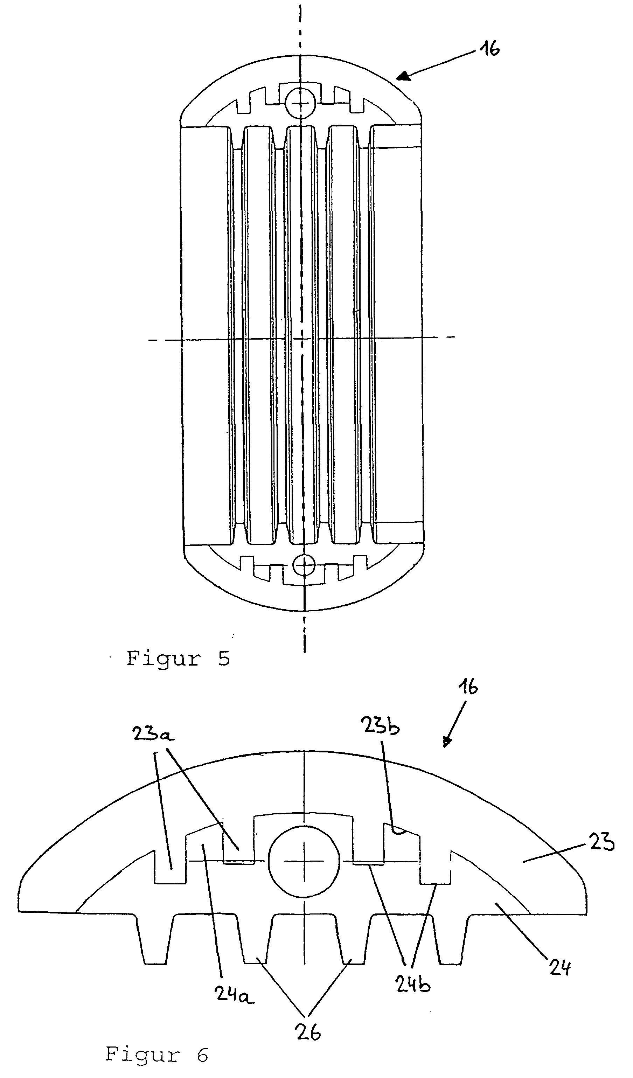

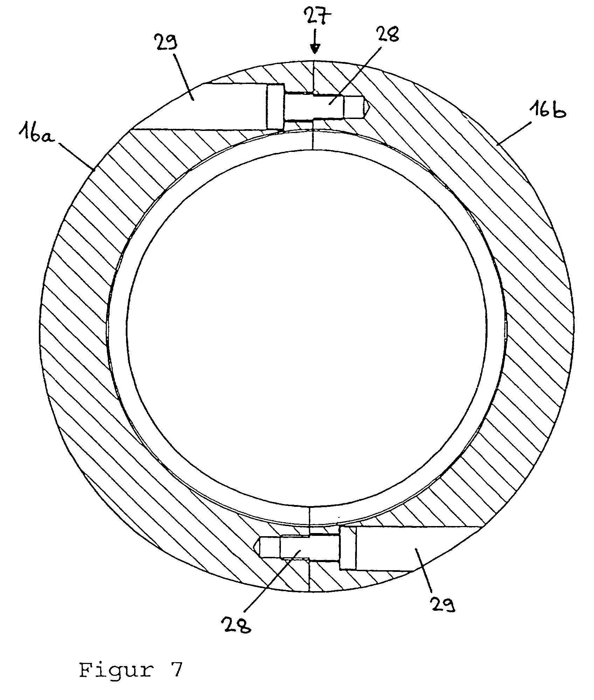

Wie den Fig. 5 und 6 zu entnehmen ist, bestehen die Verschleißringe 16 (Fig. 3) bzw. deren diese bildenden Halbschalen 16a, 16b (Fig. 7) jeweils aus zwei koaxialen Schichten 23, 24, die über Rippen 23a bzw. 24a und entsprechende Nuten 23b bzw. 24b ineinandergreifen. Die axiale Außenkontur des Verschleißrings ist teilkreisförmig. Die radiale Stärke der äußeren Schicht 23 ist - bis auf die Rippen 23a bzw. im Bereich der Nuten 23b - konstant, während die Stärke der Schicht 24 sich in Achsrichtung verändert und durch die ebenfalls grundsätzlich teilkreisförmige Außenkontur und den im wesentlichen - bis auf Rippen 26 - zylindrischen Durchlaß des Verschleißrings 16 bestimmt ist. Die Schichten 23, 24 weisen eine unterschiedliche Farbgebung oder mit anderen Worten ein unterschiedliches optisches Absorbtions- bzw. Reflektionsvermögen auf, wobei dieses bzw. die Farbe der inneren Schicht 24 derart gewählt ist, daß ein deutlicher Kontrast zum Absobtionsvermögen bzw. der Farbe der äußeren Schicht 23 gegeben ist und die innere Schicht mit einer Signalfarbe, insbesondere rot versehen ist.

Die beiden Schichten 23, 24 können lediglich reibschlüssig über die Rippen und Nuten 23a, 23b; 24a, 24b miteinander verbunden sein. Alternativ können sie miteinander verklebt sein; da der Ring aus Kunststoff besteht, können sie auch miteinander verschweißt sein. Darüber hinaus können sie gemeinsam in einem zweistufigen Spritzverfahren hergestellt sein, indem zunächst in einer Spritzform das eine Teil, insbesondere die Schicht 24 gespritzt und anschließlich die Schicht 23 um die Schicht 24 herumgespritzt wird.

Der Verschleißring 16 weist an der im wesentlichen zylindrischen Innenwandung seiner Schicht 24 vier nach innen ragende Rippen 26 auf. Mit diesen Rippen 26 greift das Verschleißteil 16 in zwischen den Rippen 13 des Schlauches 12 befindliche Nuten (Fig. 4) ein und wird derart am Schlauch 12 axial festgelegt, so daß das Verschleißteil 16 nicht entlang des Schlauches verrutschen und seiner Axialposition verändern kann. Die vier Rippen 26 ermöglichen es darüber hinaus, im Bereich des Verschleißrings 16 zwei Rippenschlauchstücke, beispielsweise unterschiedlicher Elastizität, über deren Rippen miteinander zu verbinden, so daß der Verschleißring 16 als Kupplungsmuffe für die beiden Schlauchstücke dient.

Wie schon erwähnt, bestehen die Verschleißringe 16 aus zwei halbkreisförmigen Hälften 16a, 16b, die unter Zwischenlage des Schlauches 12 zur Bildung des Verschleißrings 16 den Schlauch umgeben gegeneinander gesetzt werden und im Bereich ihrer Stirnwandungen (beide 27) miteinander verbunden werden. Dies geschieht bei dem erfindungsgemäßen Verschleißrings durch Polyamid-Zylinderkopfschrauben 28, die in eine Vertiefung 29 der Halbschale 16a eingesetzt, mit ihrem Schraubabschnitt durch eine verhängte Bohrung der Halbschale 16a hindurch und in ein gespritztes Innengewinde der anderen Halbschale 16b eingeschraubt werden - und vice versa für die in Fig. 7 im unteren Bereich von der Halbschale 16b zur Halbschale 16a ragende Schraube 28.

## Patentansprüche

1. Verschleißring, insbesondere zum Schutz eines Kabelführungsschlauchs an einem Roboter, wobei der Verschleißring (16) zwei Schichten (23, 24) aufweist, deren eine (23) die andere (24) koaxial umgibt, **dadurch gekennzeichnet, dass** die Schichten (23, 24) unterschiedliche Lichtabsorptions- und/oder -reflektionsvermögen aufweisen.

2. Verschleißring nach Anspruch 1, **dadurch gekennzeichnet, daß** die Schichten (23, 24) mittels Rippen und Nuten (23a, 24a; 23b, 24b) ineinandergreifen.

3. Verschleißring nach Anspruch 1 oder 2, **dadurch gekennzeichnet, daß** die äußere Schicht (23) bis gegebenenfalls auf ihre Rippen (23a) konstante radiale Stärke aufweist.

4. Verschleißring nach einem der Ansprüche 1 bis 3, **dadurch gekennzeichnet, daß** die Schichten (23, 24) fest miteinander verbunden sind.

5. Verschleißring nach Anspruch 4, **dadurch gekennzeichnet, daß** die Schichten (23, 24) durch einen zweistufigen Schichtspritzvorgang miteinander fest verbunden sind.

6. Verschleißring nach Anspruch 4, **dadurch gekennzeichnet, daß** die Schichten (23, 24) miteinander verschweißt sind.

7. Verschleißring nach Anspruch 4, **dadurch gekennzeichnet, daß** die Schichten (23, 24) miteinander verklebt sind.

8. Verschleißring nach einem der Ansprüche 1 bis 3, **dadurch gekennzeichnet, daß** die Schichten (23, 24) lediglich reibschlüssig miteinander verbunden sind.

9. Verschleißring nach Anspruch 8 in Verbindung mit Anspruch 2 oder 3, **dadurch gekennzeichnet, daß** die Schichten (23, 24) über ihre Rippen und Nuten (23a, 24a; 23b, 24b) reibschlüssig miteinander verbunden sind.

10. Verschleißring, nach einem der vorangehenden Ansprüche, **dadurch gekennzeichnet, daß** er an seiner Innenseite mindestens vier Umfangsrippen (26) aufweist.

11. Verschleißring, nach einem der vorangehenden Ansprüche, **gekennzeichnet durch** zwei den Verschleißring (16) bildende Halbschalen (16a, 16b), die gespritzte Innengewinde und in diese eingreifende Kunststoffschrauben (28) aufweisen.

12. Verschleißring nach Anspruch 11, **dadurch gekennzeichnet, daß** die Schrauben (28) aus Polyamid bestehen.

## Claims

1. Wearing ring, particularly for protecting a cable guidance tube on a robot, the wearing ring (16) having two layers (23, 24), whereof one (23) coaxially surrounds the other (24), **characterized in that** the layers (23, 24) have different light absorption and/or reflection capacities.

2. Wearing ring according to claim 1, **characterized in that** the layers (23, 24) engage in one another by means of ribs and grooves (23a, 24a; 23b, 24b).

3. Wearing ring according to claim 1 or 2, **characterized in that** the outer layer (23) has a constant radial thickness, optionally except for its ribs (23a).

4. Wearing ring according to one of the claims 1 to 3, **characterized in that** the layers (23, 24) are firmly interconnected.

5. Wearing ring according to claim 4, **characterized in that** the layers (23, 24) are firmly interconnected by a two-stage layer injection moulding process.

6. Wearing ring according to claim 4, **characterized in that** the layers (23, 24) are welded together.

7. Wearing ring according to claim 4, **characterized in that** the layers (23, 24) are bonded together.

8. Wearing ring according to one of the claims 1 to 3, **characterized in that** the layers (23, 24) are only connected in frictionally engaging manner.

9. Wearing ring according to claim 8 in conjunction with claim 2 or 3, **characterized in that** the layers (23, 24) are connected in frictionally engaging manner by means of their ribs and grooves (23a, 24a; 23b, 24b).

10. Wearing ring according to one of the preceding claims, **characterized in that** it has on its inside at least four circumferential ribs (26).

11. Wearing ring according to one of the preceding claims, **characterized by** two half-shells (16a, 16b) forming the wearing ring (16) and which have the injection moulded inner thread and plastic screws (28) engaging therein.

12. Wearing ring according to claim 11, **characterized in that** the screws (28) are made from polyamide.

## Revendications

1. Anneau de connexion, en particulier pour la protection d'un conduit de câbles sur un robot, l'anneau de connexion (16) présentant deux couches (23,24) dont l'une (23) entoure coaxialement l'autre (24), **caractérisé en ce que** les couches (23,24) présentent des pouvoirs d'absorption de, la lumière et/ou de réflexion différents.

2. Anneau de connexion selon la revendication 1, **caractérisé en ce que** les couches (23,24) s'interpénètrent au moyen de nervures (23a) et de rainures (23a, 24a ; 23b, 24b).

3. Anneau de connexion selon la revendication 1 ou 2, **caractérisé en ce que** la couche extérieure (23) présente une épaisseur radiale constante jusqu'à ses éventuelles nervures (23a).

4. Anneau de connexion selon l'une quelconque des revendications 1 à 3, **caractérisé en ce que** les couches (23,24) sont fermement reliées entre elles.

5. Anneau de connexion selon la revendication 4, **caractérisé en ce que** les couches (23,24) sont fermement reliées entre elles par une deuxième injection de couche.

6. Anneau de connexion selon la revendication 4, **caractérisé en ce que** les couches (23,24) sont soudées.

7. Anneau de connexion selon la revendication 4, **caractérisé en ce que** les couches (23,24) sont collées.

8. Anneau de connexion selon l'une quelconque des revendications 1 à 3, **caractérisé en ce que** les couches (23,24) sont simplement reliées entre elles par friction.

9. Anneau de connexion selon la revendication 8 et la revendication 2 ou 3, **caractérisé en ce que** les couches (23,24) sont reliées entre elles par friction à travers leurs nervures et rainures (23a, 24a ; 23b, 24b).

10. Anneau de connexion selon l'une quelconque des revendications précédentes, **caractérisé en ce qu'**il présente sur sa face interne au moins quatre nervures périphériques (26).

11. Anneau de connexion selon l'une quelconque des revendications précédentes, **caractérisé par** deux demi-coquilles (16a, 16b) formant l'anneau de connexion (16) présentant des filetages intérieurs injectés et des vis (28) en matière synthétique venant en prise dans ceux-ci.

12. Anneau de connexion selon la revendication 11, **caractérisé en ce que** les vis (28) sont en polyamide.
